# EUROPEAN PATENT SPECIFICATION

(11) **EP 3 865 839 B1**
(45) Date of publication and mention of the grant of the patent: **07.06.2023**
(21) Application number: 21157348.0
(22) Date of filing: 16.02.2021
(51) Int. Cl.: G01L 1/14

(54) **SENSOR DEVICE**
SENSORVORRICHTUNG
DISPOSITIF DE CAPTEUR

(30) Priority: 17.02.2020 FI 20205161; 04.11.2020 FI 20206104
(43) Date of publication of application: 18.08.2021
(73) Proprietor: Ravelast Oy, 90820 Kello (FI)
(72) Inventor: Tolvanen, Jarkko, 90570 Oulu (FI); Kilpijärvi, Joni, 90570 Oulu (FI); Pitkänen, Olli, 90570 Oulu (FI); Hannu, Jari, 90570 Oulu (FI); Jantunen, Heli, 90570 Oulu (FI); Junnila, Matti, 90820 Kello (FI)
(74) Representative: Kolster Oy Ab

(56) References cited:
- WO-A1-2020/009224
- CN-A- 108 731 856

## Description

### Field

Various embodiments described herein relate to the of sensor devices. In particular, the embodiments relate to a structure of a sensor head for measuring strain/motion and/or pressure/depression.

### Background

There are various sensors for measuring strain, motion, and pressure, compression, or depression. Mechanical durability is a desired factor, in particular in industrial sensors and in other applications where a sensor head is subjected to mechanical stress.

Document CN 108 731 856 discloses a sensor device comprising: a first textile layer of electrically conductive and porous textile material, forming a first electrode of the sensor device; a second textile layer of electrically conductive and porous textile material, forming a second electrode of the sensor device; and at least one dielectric layer of deformable material and disposed between the first textile layer and second textile layer.

WO 2020/009224 discloses a high-precision tension sensor which is unlikely to experience a drop in detection accuracy even when used continuously and which is hardly affected by noise, and a manufacturing method therefor. A tension sensor provided with a strip-shaped main body that comprises an elastic dielectric layer, and an elastic first conductive layer and second conductive layer provided on the respective surfaces of the dielectric layer, wherein the first conductive layer comprises a band-shaped first electrode part formed from conductive thread, the dielectric layer comprises a high-melting-point resin layer and a first low-melting-point resin layer and second low-melting-point resin layer that are provided on the respective surfaces of the high-melting-point resin layer, and the first electrode part has at least a part of the first low-melting-point resin layer impregnated therein, the tension sensor being capable of detecting expansion and contraction-related variation in capacitance between the first conductive layer and the second conductive layer.

### Brief description

The invention consists of a sensor device as defined in claim 1 and a method for manufacturing a sensor device as defined in claim 10.

### List of drawings

Embodiments are described below, by way of example only, with reference to the accompanying drawings, in which
Figure 1 illustrates a sensor device according to an embodiment;
Figure 2 illustrates resistive and capacitive responses of the sensor device according to an embodiment;
Figure 3 illustrates a cross-sectional view of a sensor device when applying a small normal pressure and under increased pressure that leads to a significant change in spacing between embedded and partially embedded layers;
Figure 4 illustrates a structure of a sensor device according to an embodiment;
Figure 5 illustrates a method for manufacturing the sensor device according to an embodiment.

### Description of embodiments

The following embodiments are examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

There is disclosed a structural design for a sensor head, inspired by combining the characteristics of e-skin and electronic textile (e-textile) into a hybrid interface consisting of biocarbon composite/silver-plated nylon (denoted as BC/SPN). Such seamless inclusions of e-skin and e-textile have been mostly disregarded in the research community. Typically, soft elastomeric materials are only considered for encapsulation (i.e. waterproofing) or as glues for e-textiles, but not as part of the active structures. E-skins typically do not utilize textiles as substrates, electrodes or as part of their active materials.

Herein, we demonstrate a stretchable and highly sensitive sensor exhibiting insensitivity to the strains induced by stretching and bending. The device is capable of providing resistivity switching under compressive stress corresponding to a pressure sensitivity up to 60.8 kPa⁻¹ with a wide dynamic range (up to ~50 kPa). The relative resistance change of the device is more than a thousand-fold larger under normal pressure than during tensile or bending strain. More interestingly, the inventor found the resistivity switching thresholds to be controllable by variation of the thickness of the stencil printed biocarbon film. The BC/SPN device is also capable, through its capacitive operation mode, of accurate strain sensing suitable for human motion monitoring. This disclosure gives a detailed insight into the electromechanical properties of such a sensor device under capacitive and piezoresistive operation modes.

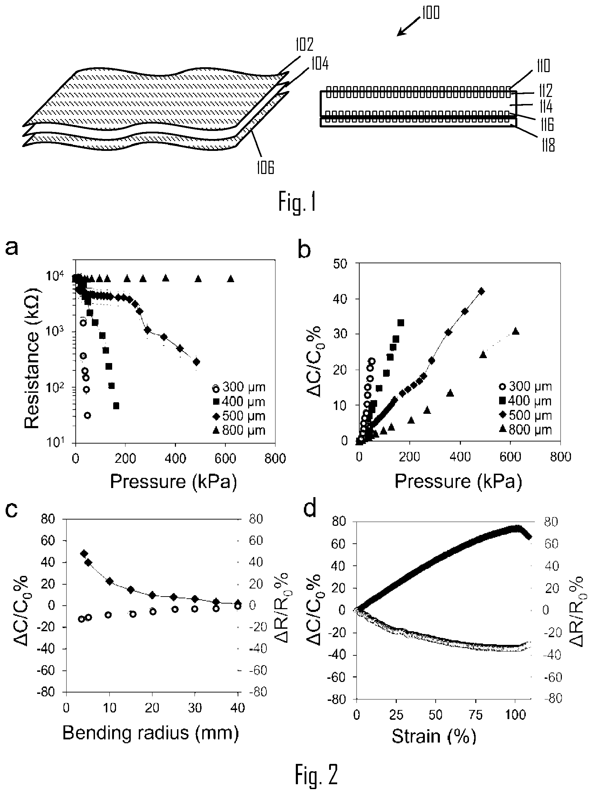

Figure 1 shows a schematic presentation of a (BC/SPN) sensor device 100 that comprises a multi-layered hybrid structure. The sensor device 100 comprises a first electrically conductive textile layer 102 and a second electrically conductive textile layer 106 and, between the textile layers 102, 106, a layer of dielectric material 104. At a glance, the BC/SPN device may resemble a typical parallel-plate capacitor structure having two overlapped electrodes in the form of silver-plated nylon (SPN) and a thin dielectric layer made of biocarbon composite (BC). The BC/SPN enables high levels of deformability through its excellent stretchability but, more importantly, conformability as a wearable device and suitability in other applications where durability is required. The BC/SPN may be fabricated by stencil-printing two layers of the composite solutions (polyurethane rubber/pyrolyzed pine 5 wt.%) onto polyimide taped SPN and applying pressure after stacking the top SPN onto a planar structure. The first BC film layer may be almost completely embedded into the bottom SPN while the second BC film layer may be only partially embedded into the top SPN. This is partly due to the nature of knitted fabrics (i.e. non-smooth surfaces), where empty spaces are formed within intermeshed and interconnected loops creating meandering paths. The applied pressure during printing can control the penetration depth of the stencil printed layers into the porous SPN. The embedded structure illustrated on the right-hand side of Figure 1 leads to a stronger mechanical adhesion and layer-to-layer bonding between the films and the knitted fabrics, reducing the likelihood of delamination in the multi-layered structure. As illustrated in Figure 1, the layers 102 to 106 may be split to a higher number of layers in terms of embedding the dielectric material into the textile layers. The first textile layer 102 may form a first layer 110 where the textile material is not embedded into the dielectric material. The part of the first textile layer 102 that is embedded into the dielectric material then forms a second layer 112 directly next to the first layer 110. The next layer 114 may consist of the dielectric material layer 104 that is not embedded into either textile layer 102, 106. Similarly, the second textile layer 106 may form a layer 116 where the dielectric material is embedded into the second textile layer 106 and, optionally, a layer where the dielectric material is not embedded into the second textile layer 106. In embodiments where the sensor device is attached to an object such as a garment, a structure, a machine, etc. where the sensor device 100 is used, an adhesive layer 118 may be used to adhere the sensor device to the object. The adhesive layer may penetrate the second textile layer 106.

A thinner dielectric composite layer results in a higher specific capacitance (i.e. capacitance per area) due to the reduced distance between the textile layers (SPN strips), but more importantly it may adjust a resistance switching threshold under normal pressure. Also, the ingenious structural design of the device enabled insensitivity to other types of normal forces (tensile and bending stress). To get an insight into the electromechanical behavior for distinct deformations under normal stresses, the capacitive and piezoresistive operation modes of the BC/SPN are elaborated below.

Stretchable sensors are characterized by their electrical responses under normal stress such as tensile strain. The strain sensitivity can be expressed as a gauge factor (GF = (ΔC/C₀)/ε). For capacitive sensors it can be defined as a relative change of capacitance (ΔC/C₀) in respect to applied strain (ε). The BC/SPN devices displayed the typical sensitivity of a capacitive sensor. The response of strain sensors with a parallel-plate capacitor structure are dictated by the Gauss's law defining the capacitance of an overlapped electrode structure. Assumptions of Poisson's ratios (v = 0.5 for all materials) and relative permittivity being a fixed parameter would lead to a simplistic estimation of a capacitive sensor's response under stretching (C = (1+ε)C₀). Therefore, linear responses occur as structural dimensional changes are the prime source of increased capacitance.

The change of capacitance becomes increasingly non-linear with increased strain, displaying a strong second-degree polynomial fit with negligible hysteresis. The fit suggests strain-dependent dielectric properties in the hybrid interface despite the low filler concentration of the biocarbon. The strain-dependent dielectric properties of BC/SPN at low frequencies have been found to partially relate to the strain-dependency of Maxwell-Wagner-Sillars polarization and charge dipoles, but more importantly it relates to the structural interfaces in the BC/SPN. Reorientation of the filler network in terms of increased horizontal separation and breakage of agglomerated carbon clusters within the polymer matrix may affect the relative permittivity (εᵣ). Even so, the vertical connectivity of the filler network simultaneously would be increased by the Poisson effect. But also, increasing the porosity of the SPN may decrease the relative permittivity further. Strain-dependent dielectric properties may require compensation to further improve a sensor's linearity which may be taken into account when calibrating the sensor.

The BC/SPN may display an increase of a relative capacitance change (ΔC/C₀)during repetitive stretching-releasing cycles when considering sample to sample variation. It was observed that the capacitive response showed non-transient behavior with a uniform signal shape, indicating the reliability of the device for dynamic strain sensing. Stretchable electronic devices may require electromechanical robustness to withstand the deformations caused by dynamic conditions. Plain unilateral movements caused by stretching could be considered inadequate for testing the robustness of wearable devices depending on their attachment on the body or skin. Therefore, a continuous multidirectional stress was applied to a BC/SPN device by stretching-bending-releasing movements for ~39 hours with a constant movement speed of 1 mm s⁻¹. The BC/SPN device showed an excellent cyclic stability and reliability with a negligible drift after 0.5 hours. We anticipate the stress-induced orientation of the filler-matrix network to be the main reason for the drifting behavior during stretching-releasing cycles. Altogether, the hybrid BC/SPN structure displayed an excellent robustness to mechanical deformation despite the mechanical property transition between materials. The ingenious structure allowed a suppression of enfeebled points through the embedded BC/SPN interfaces.

For stretchable electronics, an absence of machine washability can severely hinder their practicality for real-world applications. Typical failures during washing may occur after devices absorb water into their delicate structures or as result of mechanical wear during spin drying. These may lead to partial failures causing significant device instability or destructive failures, where a device completely stops functioning. The durability of BC/SPNs was tested during 30 machine washing cycles (40 °C, 1200 rpm, of 45 min/cycle) when samples were put into a mesh bag and washed together with other clothes/garments. The mesh bag protects the SPNs from abrasive mechanical wear that may occur during spinning. This could lead to a harmful increase of the contact resistance. The ΔC/C₀ of the BC/SNP (3 samples) were recorded before and after machine-washing cycles Also, the contact resistance variation was tested after each machine-washing cycle (after drip drying). The BC/SPN devices showed negligible variation of ΔC/C₀ during repetitive stretching-releasing cycles before and after machine washing. More importantly, the average contact resistance of BC/SPNs were stable and structural dimensions were unchanged after 30 cycles indicating the high durability of the devices.

To demonstrate the practicality of BC/SPN for precise strain sensing, the devices were attached to skin with an adhesive layer to monitor human motion. The daily movement of the human body can cause the skin to stretch by up to ~50%, which is well within the linearity region of a BC/SPN device, where a change in dielectric constant has negligible effect on the ΔC/C₀. As a result, the device showed repeatable output signals appearing and disappearing with motion and when returning to the initial position (i.e. straightening of wrist, and so on). More importantly, the device showed immutable signal amplitude with a constant motion range, a negligible static drift and unchangeable ΔC/C₀ when the frequency of the motion increased. These together with no sign of overshooting and undershooting behavior indicated the high reliability of the device for precise human motion monitoring at larger strains. To monitor small strains caused by tension of the vastus lateralis, a sensor batch was fabricated with an increased size (effective area ~25 cm²).

The devices exhibited a relatively high specific capacitance (> 13 pF cm-²) through the embedded BC/SPN interfaces. Thus, a high signal-to-noise ratio and noise immunity against environmental sources may be achieved while having no effect on the reliability of the device. The achieved specific capacitances were up to 40 times higher than in other traditional non-supercapacitive wearable sensors. The BC/SPN device has an ability to track motion and movements of the human body and even smaller strains caused by muscle tensions when in its high precision capacitive operation mode. The device holds potential for accurate real time monitoring of typical human activities, either when directly attached to the skin or embedded into clothes and other textiles. Similar potential can be observed in other applications, e.g. in industrial applications where the sensor device is configured to measure motion of a machine such as a robot.

The piezoresistive and capacitive operation modes of a BC/SPN device were studied under normal stresses including compressive, tensile and bending stress. The BC/SPN showed a substantial film thickness dependent resistance switching behavior (ΔR/R₀ up to ~10⁴) under compressive stress (Figure 2a). The pressure sensitivity can be expressed as the relative resistance change to applied pressure (δ = (ΔR/R₀)/ΔP). The resistance change of the BC/SPN corresponded to remarkable maximum pressure sensitivities of ~60.8 kPa⁻¹ in the pressure regime up to 50 kPa with pre-stress. The pre-stress required for sample attachment had a negative effect on the sensitivity as the initial resistance value of the BC/SPN decreased from approximately 30-40 MΩ to 10 MΩ. The response and recovery times of the device were less than 10 ms when applying normal pressure. It was found that the resistance switching thresholds shifted to a higher level of normal pressure when the film thickness increased. As a result, the average pressure sensitivity decreased to 0.05-1.16 kPa⁻¹ (for film thickness ~400-500 µm) in the high pressure regime (>150 kPa). Interestingly, biocarbon composite films with thicknesses above 800 µm tended to be unresponsive even to normal pressure with piezoresistive operation mode (< 1 MPa). The capacitive operation modes of the devices had altogether over a hundred times poorer pressure sensitivities (Figure 2b) but advantages such as near linear responsiveness.

Tunable switching thresholds are important for diversification of the spectrum of applications. We propose a simple strategy which is based on controlling the stencil printed biocarbon composite film thickness. Controlling the film thickness allows easily adjustable sensitivities and tunable resistance switching thresholds in a wide pressure regime (> 200 kPa).

The piezoresistive operation mode of BC/SPN showed strong responsiveness towards compressive stress, while it was unresponsive to applied tensile and bending stresses. The BC/SPN relative resistance changes (ΔR/R₀) varied by only by -12% and -35% when bending radius (r_{b}) decreased to 4 mm (Figure 2c) and applied tensile strain increased to ~ 100% (Figure 2d), respectively. Previous bending-insensitive sensors have shown substantial pressure sensitivities only in narrow pressure regimes (≤ 1 kPa) in comparison to this work. The highly responsive nature of the hybrid interface allowed more than a thousand-fold larger relative resistance change under normal pressure than under tensile or bending strain in the demonstrated operational ranges (for a film with thickness ~300 µm). Decoupling Poisson's effect is not possible with capacitive operation mode as the device reacts in similar manner towards any mechanical stimuli (Figures 2b-d).

Achieving pressure sensors that are insensitive to strain and bending is particularly advantageous when they are directly attached on soft, curvilinear and movable surfaces such as human skin. The natural movement of the skin during our daily activities leads to the development of stresses associated with mechanical deformations that can significantly impair the accuracy of an ordinary sensor. To demonstrate efficient decoupling for measuring normal pressures, negligible small differences in flat, bended and stretched states must be shown. The piezoresistive operation mode is able to record changes in normal pressure when the device is attached to a curvilinear surface (r_{b} = 4mm) or being stretched (ε = 100%).

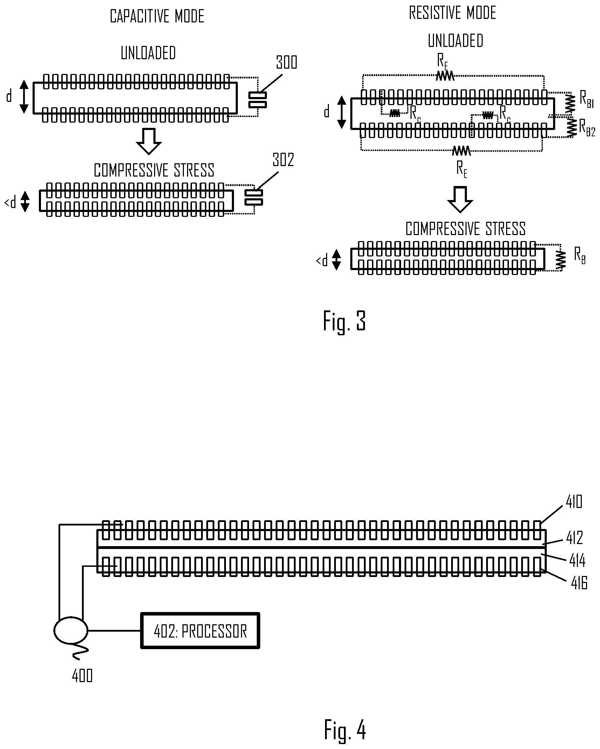

The working principles of the BC/SPN sensor device with capacitive and piezoresistive operation modes are illustrated in Figure 3. The capacitive change of the device is mainly controlled by the dimensional changes occurring under normal stresses. Structural compression leads to increase in interfacial polarization and formation of more densely packed microscopic capacitor networks as the separation of filler particles and SPN decrease. The textile layers are then brought closer to one another, thus changing the overall capacitance of the sensor device that can be measured. This is illustrated on the left-hand side of Figure 3. In an unloaded situation where no pressure or compressive stress is focused on the sensor device, the textile layers remain within distance d from one another, and a certain capacitance 300 can be measured from the sensor device. Due to the compressive stress, the distance reduces to smaller than d changing the capacitance to 302. Due to nature of the filler and increased dielectric losses (despite decreased bulk resistivity), the value of relative permittivity does not significantly change. The affinity of the piezoresistive operation mode under tensile and bending stress relates to the parallel-plate capacitor type of structure leading to dimensional change dominant responses. Accordingly, there is no need to use piezoresistive materials in the textile layers and the dielectric layer.

However, for normal pressure, the resistivity change of the device is dominated by the contact resistance change and the bulk resistivity change of the embedded BC/SPN layers forming a parallel resistance. The average resistivity of the biocarbon filler was found to be ~660 Ω·m and the biocarbon composite could be considered as an insulator. The low conductive filler plays a major role in controlling the resistivity under deformation of the SPN. At the initial stage, the total resistance of the device can be expressed as R = R_{E}+[1/R_{C}+1/(R_{B1}+R_{B2})], where R_{E}, R_{C}, R_{B1} and R_{B2} denote the resistance of electrodes (textile layers), contact resistance to SPN and the resistance of the embedded/partially embedded BC/SPN layers, respectively. Furthermore, R_{B} represents the resistance between the electrodes that can also be measured. The device has a high resistance when unloaded due to a high parallel resistance in the presence of the small number of contact junctions and as the resistances R_{C}, R_{B1}, and R_{B2} are large.

Under compressive stress, the number of conductive junctions (denoted as n) significantly increases in the SPN/filler network having a relatively large particle size (~20 µm). Thus, the resistance of the BC/SPN becomes R = R_{E}+(1/R_{C}+1/[n(R_{B1}+R_{B2})]). The porosity of the intermeshed and interconnect structure of SPN reduces as a function of normal pressure leading to an increased contact area and decreased contact resistance within hybrid interfaces. These leads to an abrupt decrease in the parallel resistance under normal pressure giving rise to a large resistivity switching at an adequate load. This is easily comprehensible by observing the sensor device under the compressive stress on the right-hand side of Figure 3. The compression brings the textile layers closer to each other, thus decreasing the resistance between them and also the resistance to the dielectric layer. The compression also compresses the textile material, thus reducing the porosity and reducing the internal resistance. Furthermore, it can be speculated that the complex stress-dependent conduction of biocarbon contributes to the decrease of resistance of the conductive junctions within hybrid interfaces.

The controllability over the resistance switching thresholds with film thickness was found to be related to the higher degree of deformability (ΔD/D₀)/(ΔL/L₀) at the hybrid interface than at the biocarbon composite film under normal pressure. For deformations associated with tensile and bending stress the parallel resistance remains large even though the number of contact junctions increase as a result of the Poisson's effect. There is only a small contact area change and contact resistance remains larger as the porosity of SPN increases (i.e. dimensional changes dominate).

The BC/SPN can show highly reversible resistance switching behavior. The resistance-switching characteristic is also insensitive to stretching/bending caused by movements.

Ultrasensitive mechanoresponsive materials (MRM) with switching characteristics are useful in systems that require low power consumption. The ultrahigh resistance or current-switching on/off ratios in MRM enable lower driving voltages (i.e. lower power consumption) for such systems without using additional electronic components (such as amplifier circuits). Switching devices can be classifiable into two categories: (i) flexible pressure switching devices with small working ranges and (ii) stretchable strain switching devices.

In summary, there is disclosed a structural design inspired by combining the characteristics of e-skin and e-textile into a stretchable single stimuli-responsive sensor. The low-cost fabrication method, e.g. stencil printing biocarbon composite films onto silver-plated nylon, enables control of the resistivity and capacitance under compressive stress through variation of the film thickness. The selection of the conductive textile material may be used as another or alternative factor for controlling the resistance and capacitance (sensitivity) of the sensor device. The piezoresistive operation mode of the devices enables a remarkable pressure sensitivity (e.g. up to 60.8 kPa⁻¹) with a wide dynamic range (~ 50 kPa). This corresponded to a maximum relative resistance change of ΔR/R₀ ~10⁴ from the low to medium pressure regime, while showing unresponsiveness to tensile strain (ΔR/R₀ ~ -30% for ε > 100%) and bending (ΔR/R₀ ~ -12% for r_{b} = 4 mm). The capacitive operation mode of the device enables high precision strain sensing for motion monitoring, for example. The response and recovery times of the sensor can be even lower than 10 ms for normal pressure. The characteristics of such sensor devices are usable for systems and environments providing visual feedback and interactions with human, robotics or even prosthetics.

Let us then describe some embodiments of the invention with reference to Figure 4. According to an aspect, a sensor device comprises: a first textile layer 416 of electrically conductive and porous textile material, forming a first electrode of the sensor device; a second textile layer 410 of electrically conductive and porous textile material, forming a second electrode of the sensor device; at least one dielectric layer 412, 414 of deformable material and disposed between the first textile layer and second textile layer, wherein the at least one dielectric layer penetrates at least partially the porous textile material in the first textile layer and the second textile layer, thus integrating into the first textile layer and the second textile layer; and means 400, 402 for measuring at least one of capacitance between the first textile layer and the second textile layer and resistance of at least one of the first textile layer and the second textile layer.

The feature that the dielectric layer penetrates the textile material provides several technical effects: it reduces the risk for delamination and improves the sensitivity of the sensor. The latter feature spans from that the porous textile material, together with the dielectric material therein, realizes a high number of 'capacitors' in the layer where the penetration occurs.

In an embodiment, the sensor device is a textile patch, and the means comprises an interface to a measurement circuitry 400 configured to connect to the first electrode and the second electrode via signal lines in order to measure the capacitance and/or the resistance. The measurement circuitry may be configured to perform the resistance measurements by measuring one or more of the resistances R_{E}, R_{C}, R_{B}, R_{B1} and R_{B2} described above. In an embodiment, the measured resistances are R_{E} for both (all) electrodes and the resistance R_{B} between the electrodes.

With respect to the capacitance measurements, the capacitance may be measured by using state-of-the art capacitance measurement techniques, e.g. an alternating current bridge, an analog timer circuit configured to generate a frequency inversely proportional to the capacitance of the sensor device together with a pulse counter counting the frequency, or another method. The measurement circuitry may include additional components required for conducting the capacitance measurements, such as an analog-to-digital converter, one or more switches, one or more measurement capacitors, one or more measurement resistors, one or more diodes, etc. With respect to the resistance measurements, any one of the resistances may be measured, for example, by converting the resistance (or change in the resistance) to a voltage (or change in the measured voltage) and, then, applying the voltage to an analog-to-digital converter and to the processor 402 for processing. The measurements may be calibrated to compensate for potential ambient effects, hysteresis and/or drift of sensor characteristics.

In an embodiment, the means comprises the measurement circuitry. In some embodiments, the means may further comprise a processor 402 configured to analyse the measured capacitance and/or resistance. Depending on the embodiment, the processor 402 may then trigger an action on the basis of the analysis or estimate a physical or physiological parameter on the basis of the analysis. Such a parameter may be motion of the sensor device, accumulated motion of the sensor device, pressure or force induced on the sensor device, or energy expenditure of an object to which the sensor device is attached, e.g. a human or a machine. The sensor device may thus be used in various applications.

In an embodiment, the sensor device is a strain sensor, and wherein the means are configured to measure strain on the basis of the capacitance between the first textile layer and the second textile layer.

In an embodiment, the sensor device is a pressure sensor, wherein the means are configured to measure pressure induced on the first textile layer and/or the second textile layer on the basis of the resistance of the at least one of the first textile layer and the second textile layer.

In an embodiment, the textile layers are full metal layers providing higher mechanical strength. In other embodiments, the textile layers are non-metal fibres coated with metallic coating.

In an embodiment, the sensor device comprises or is coupled to a communication circuitry configured to transmit the measurement signal(s) or measurement data to another device, e.g. a computer, a server, or a measurement data collector device. The communication circuitry may support a wireless communication protocol such as Bluetooth, Zigbee, or any other wireless protocol suitable for such sensor devices. A typical requirement for the communication circuitry is low power consumption but, in some implementations, the power consumption may not be an issue. Alternatively, the communication circuitry may support wired communications. In some embodiments one or more sensor devices may be collected to the measurement data collector device via wired connections. Even in some implementations where the sensor device is embedded inside a material such as rubber, the wired communications may be more suitable than the wireless communications, e.g. when the material attenuates radio signals to severely. The wiring may then also be embedded inside the material. The material may be textile, rubber, concrete, or any other material, depending on the implementation.

Let us next describe some applications for the sensor device. In an embodiment where the sensor device is the pressure sensor, the sensor device may be attached or integrated into a handle of a controller of an electronic device or a machine. The sensor device enables measuring the pressure, and the processor 402 may convert the measured pressure into one or more control commands issued to the electronic device or machine. The pressure sensing and the control commands may have a linear or a non-linear correspondence to provide the respective linear or non-linear action that is responsive to the pressure applied by a user or a robot on the sensor device. The processor may store a mapping table by mapping various values of the measured pressure with the respective control commands to define the correspondence. Alternatively, the pressure sensor may be an on-off sensor, and the database may define a threshold value for the measured pressure that triggers the control command and respective action. Depending on the embodiment, either the measured pressure exceeding or falling below the threshold may trigger the action and, otherwise, the action is not triggered.

In embodiments where the sensor is configured to measure a user, the sensor device may be attachable to the user's skin or garment. Since the contraction and compression of the sensor causes the changes to the capacitance and/or resistance, the sensor device may be used to measure the user's motion. An example of such motion can be muscular contraction of a muscle on which the sensor device is attached. For example, the sensor device may be attached to a side of a leg to monitor muscle tension during standing up - sitting down motion, when standing still, and/or when raising the other leg to different heights. The ΔC/C0, R_{B}, and/or R_{E} changes as a result of the change in the motion, enabling measurement of the motion by measuring the capacitance of the sensor device. In a similar manner, the sensor device may be attached to a wrist to measure bending the wrist, or to a forefinger to measure bending the finger, or to an elbow to measure bending the elbow. In yet another embodiment, the sensor device may be arranged to be attached to the user's chest or thorax and to measure respiratory rate of the user. The breathing causes motion of the thorax, thus causing deformation of the sensor device that can be measured by measuring at least one of the capacitance and one or more of the resistances R_{E}, R_{B}. In such embodiments, the sensor device may be at least partially integrated into the garment such as a shirt, bra, or strap. At least the sensor head (the textile layers and the dielectric layer) may be integrated into the garment, and the measurement circuitry may be provided in a separate casing or module that can be attached to the garment via a snap fastener, magnet, etc.

In an embodiment where the sensor device is implemented in the garment, the dielectric layer may conform to the shapes of the garment, e.g. a glove, a sock, a headwear, or a show, and the textile layers may be attached to the garment on both sides of the garment at the location(s) where the sensor device(s) is/are designed to be located in the garment. Therefore, the dielectric layer may cover a larger part of the garment than the textile layers, and only some parts of the dielectric layer are used to form the sensor(s). The same dielectric layer may then be used for multiple sensor devices by arranging the textile layers at the various locations in the garment. The same principle may be applied to substrates other than the garment.

In general, by measuring the capacitance and/or resistance, the muscular contraction can be measured and used to analyse, for example, a mechanical load on the muscle. In embodiments where the sensor device is configured to be sensitive enough, even heart rate or similar physiological parameters may be measured by using the sensor device. A heart pulse causes the veins to expand, and the sensor device may measure such a motion, and the processor may convert the measurements to heart rate data.

In an embodiment, the sensor device is attached to a robot, e.g. to a robot arm configured to grip objects. The sensor device may provide the robot with a touch sensing feature. As described above, the sensitivity of the sensor device may be controlled with the selection of the thickness of the dielectric material, the selection of the dielectric material and the material of the textile layers, and the area of the textile layers facing each other (the 'contact area' of the capacitor electrodes). Accordingly, the sensor device may be used in applications where the objects gripped with the soft or rigid robot arm are arbitrarily fragile. The sensor device may be attached to an internal surface of the robot arm where the robot arm touches the gripped object. Since the grip force deforms the sensor device, the sensor device may be used adjust the grip by measuring the above-described electrical properties of the sensor device, e.g. the resistance and/or capacitance. The measurements may then converted into a digital form by an analog-to-digital converter and be used to control the grip. For example, the processor may control the robot arm on the basis of the (resistance and/or capacitance) measurements to increase the grip force until a certain threshold grip force is measured from the sensor device. In response to the measuring the threshold grip force, the processor may instruct the robot arm to maintain the grip and to start moving the object. The sensor device may be an accessory to the robot, e.g. a 'glove' to the robot arm.

The sensor device may be applicable to other types of robotic implementations, e.g. soft robotics. In the soft robotics, the materials of the robot are formed from soft materials for increased flexibility and adaptability for accomplishing various tasks. Soft robotics are used, for example, to imitate living organisms such as humans, animals, or plants.

In an embodiment, the sensor device is attached to or integrated into a prosthesis or an orthosis and used to measure stress on the body part, e.g. a joint, motion of the body part, amount of physical rehabilitation, etc. As described above, the sensor device may be used as a motion sensor, and mechanical motion of the orthosis or prosthesis also induces mechanical motion and deformation to the sensor device. In a similar manner, the sensor device may be attached to or integrated into another wearable article such as a garment, a bracelet, or a shoe. The sensor device may in such applications also used in a similar manner as other motion sensors applied to wearable devices to measure the user's motion and activity. In the embodiment where the sensor device is in the shoe, the sensor device may be used to measure wear of the shoe or strain or pressure focused on the shoe. The sensor device may be implemented between the shoe and an insole of the shoe, and thickness of the sensor device may be in the order of a few (less than five or less than two millimetres), a millimetre, or even below one millimetre.

In an embodiment, multiple sensor devices are arranged into an area where the measurements are to be performed, e.g. the robot arm, garment, or shoe, and the multiple sensor devices may transmit or couple the measurement signals or data to an aggregator device that collects the measurements and forwards the measurements to the processor. The aggregator device forward the measurements wirelessly or via wire to the processor, and the processor may be comprised in the same object (e.g. shoe or garment) where the sensor devices are located or it may be external to the object. For example, multiple sensor devices may be disposed at various locations in the shoe to measure the pressure on the foot while running/walking. In such an embodiment, the dielectric layer may be arranged as a middle layer integrated into the shoe or the insole, and the textile layers may be arranged as patches on both sides of the dielectric layer at the locations where the sensor devices are designed to be located, similar to what is described above.

In an embodiment, the sensor device is attached to an object that is designed to be a target of mechanical impacts. Examples of such objects are various punching bags used in boxing or martial arts. The punch causes deformation of the object and, as a consequence, deformation of the sensor device attached to or integrated into the object, and the deformation may be measured by measuring the electrical properties of the sensor device. The electrical properties may then be mapped to various impact force values so that the processor is capable of analysing the strength of the impact and output a corresponding result via a user interface, for example. In order to increase the positioning accuracy for the impact measurements, multiple sensor devices may be implemented in the object. The locations of the sensor devices in the object may be stored in a memory accessible to the processor so that the processor may map the impacts measured by the sensor devices to the respective locations of the sensor devices.

In an embodiment, the sensor device is used as a switch in the above-described manner. The mechanical deformation of the sensor device induces the change to the electrical properties that can be measured. The processor may monitor the measured electrical properties and, upon detecting that the electrical properties fill a certain criterion indicating a certain amount of compression, depression or deformation of the sensor device, the processor may output an instruction to switch a state in a device or system where the sensor device is used, e.g. switch lighting or another function on/off or adjust the degree of lighting or a degree of another function (volume, brightness, etc.).

In an embodiment, the sensor device is used to monitor wear or other mechanical properties of industrial components or mechanical structures. In such embodiments, for example, the sensor device may be embedded inside an elastomer such as rubber, or to a surface of such an object. The textile layers may be made of flexible metal capable of deforming as needed in the particular application. The measured object may be an industrial or a consumer elastomer component or product. Examples of such heavy-weight components include a buffer, a structural beam, a bearing such as an elastomeric bridge bearing.

In an embodiment, the sensor device is used in sports applications as a part of a time measurement system employing a touch-sensitive sensor. For example, upon detecting that the sensor device is touched (via the measurement of the electrical properties of the sensor device), the processor may start a timer counting time or record a current time of the timer, for example.

In an embodiment, the sensor device is attached to a tyre of a vehicle. The sensor device may then be used to measure the deformation properties of the tyre, pressure on the tyre, air pressure inside the tyre, wear of the tyre, and/or radial speed of the tyre. The sensor device may be integrated into the tyre structure or attached to an inner surface of the tyre at a belt of the tyre. In embodiments where the belts are made of steel or a similar conductive material, belts or parts of the belts arranged in layers in the tyre may form the textile layers of the sensor device, and the dielectric material may be disposed between the belts such that the dielectric material penetrates at least partly the belts.

In an embodiment, the textile layers and the dielectric layer is encapsulated to provide mechanical protection or to better integrate the sensor device to an object.

In an embodiment, the deformable material of the at least one dielectric layer is elastomer or a composition of multiple elastomers. The elastomer may be thermoplastic or thermoset. The dielectric layer may be or comprise silicone or polyurethane. The deformable material of at least one dielectric layer may comprise polyurethane or silicone mixed with biocarbon. The polyurethane may be rubber made of two components A and B. As known in the art, they are available for making moulds that can be poured, brushed, sprayed, or printed onto a substrate (the textile layers in the embodiments). The biocarbon may be used to improve the electrical conductivity of the dielectric layer, still maintaining the sufficient resistivity, and to improve the capacitive sensitivity of the sensor device. Instead of biocarbon, another additive with appropriate electrical conductivity/resistivity may be applicable, providing the sensor device with various characteristics in terms of electric properties and performance of the sensor device. In an embodiment, the amount of additive such as the biocarbon is 5 percent of weight of the total mass of the A and B components. With other additives, another amount may be required. After the additive has been added to the A component, the B component can be added to the A component.

In an embodiment, the first textile layer is arranged to face an object to which the sensor device is attached, e.g. a human or a machine, and the at least one dielectric layer penetrates the first textile layer by 20-90% of the total thickness of the textile layer, that is more than or equally as much as it penetrates the second textile layer. When the penetration is substantially equal to both textile layers, a more durable structure may be achieved. The degree of penetration may be arranged as dependent on the desired durability of the sensor. Deeper penetration may be arranged when higher durability is required. Therefore, higher durability may be achieved when the penetration is 40-90% of the total thickness of the textile layer, for example. From another perspective, the part of the sensor where the dielectric layer(s) has/have penetrated the textile layers may form 20-80% of the total thickness of the sensor device. In addition to the fabrication method, the degree of penetration depends on the porousness of the textile layers and on the viscosity of the deformable material when it is disposed on the textile layer(s). However, the deformable material may be absorbed inside the textile layer to integrate into the textile layer and mix into the textile layer.

In an embodiment, the dielectric layer(s) separate the first textile layer from the second textile layer so as to form a capacitor. Thanks to the deformable nature of the dielectric layer(s), the sensor device also is deformable, and its electric properties change as a response to the deformation, as described above. The deformation can thus be measured and used in various applications.

In an embodiment, the sensor device is a switch responsive to a change in the at least the measured resistance. Optionally, the measured capacitance may also be used in the detection. The switch may be a part of a user interface, e.g. a user input device of the user interface. The user may thus input a command or another input to the processor, and the processor may perform a function in response to the user input. In another embodiment, the switch is a part of an interface of a machine such as a robot.

In an embodiment, the first textile layer and second textile layer are made of knitted fabrics. Knitted fabrics inherently provide more porous structure and rougher surface than woven fabrics, thus providing better integration of the dielectric layer into the textile layers and improving deformability and compression capabilities of the sensor device.

In an embodiment, the dielectric layer comprises at least two layers where the dielectric layer has penetrated the first textile layer and the second textile layer and, between the at least two layers, a layer where the dielectric layer has not penetrated a textile layer.

According to an aspect, there is provided a garment comprising the sensor device of any preceding claim. The garment may be a shirt, a glove, a hat or a cap, harness, or a bra, for example.

According to another aspect, there is provided a method for manufacturing a sensor device, comprising: providing a first textile layer of electrically conductive and porous textile material, forming a first electrode of the sensor device; providing a second textile layer of electrically conductive and porous textile material, forming a second electrode of the sensor device; forming at least one dielectric layer of deformable material on the first textile layer and on the second textile layer by disposing the deformable material in a liquid form on the respective first textile layer and second textile layer and allowing the deformable material to penetrate the porous textile material and solidify; and arranging the first textile layer and the second textile layer into a layered structure where the at least one dielectric layer is disposed between the first textile layer and the second textile layer.

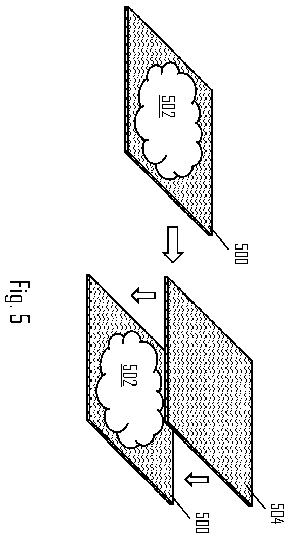

Figure 5 illustrates the method. The first textile layer 500, e.g. silver-plated nylon, is provided on a (non-stick) surface. The deformable material such as the elastomeric material, polyurethane rubber with the additive etc. is mixed in a vacuum, for example. Then, the solution 502 is poured on the first textile layer 500 on a desired area. A squeegee or a similar tool may be used to ensure desired spreading of the solution. Such a dielectric layer may be formed on both the first textile layer and the second textile layer or only on the first layer in this manner. The second textile layer 504 may then be disposed on the first textile layer such that the deformable material becomes applied to both textile layers. The penetration of the solution into the textile layers 500, 504 may be controlled by the pressure applied to the solution, in case of where a textile layer is stacked onto the dielectric layer, after it has been poured onto non-stick surface or textile layer. The amount of pressure and subsequent penetration of the deformable material into the textile layers will affect the mechanical durability and the electrical sensitivity of the resulting integral sensor device.

In an embodiment, polyurethane rubber (Vytaflex 20, Smooth-On) A-component is mixed at room temperature with 5 wt.% of crushed pine powder (pyrolized at 370 °C, particle size ~20 µm). The solution may be repeatably vacuum degassed before and after adding the B component (mixing ratio 1A:1B). Then the poured polyurethane/biocarbon 5 wt.% solution may be stencil-printed onto a polyimide film taped silver-plated nylon fabric to form a composite film/conductive fabric layer with a thickness of about 500-850 µm. The layered structure may be cured at 23 °C for 16-24 hours. Similarly, another composite film layer may be stencil-printed on top of the cured layered structure to adhere the second textile layer to the first textile layer. Further layers may be implemented in the same manner on top of each other. Then, the multilayered composite film/textile structure with a total thickness of ~950-1700 µm may be cured at 23 °C for 16-24 hours and post-cured at 65 °C for 8 hours.

In an embodiment, the dielectric layer may be disposed simultaneously on both the first textile layer and second textile layer such that the solution is poured onto a textile layer, and the first and second textile layers are from the same textile layer. The first and second textile layers may be cut from the same textile layer. Accordingly, it may be better ensured that the thickness of the dielectric layer is the same in both textile layers.

In an embodiment, further comprising selecting total thickness of the at least one dielectric layer according to an application of the sensor device, wherein a first thickness is selected for a first application and a second thickness different from the first thickness is selected for a second application. As described above, the thickness may affect the electrical sensitivity of the sensor device, enabling customization of the sensor device for various applications.

In an embodiment, the thickness of the at least one dielectric layer is controlled with the amount of the deformable material disposed between the first textile layer and the second textile layer. As a consequence, electric properties of the sensor device are controlled accordingly. For example, by using a thicker dielectric layer, in particular with a thicker part of the dielectric layer that has not penetrated the textile layers, pressure sensing capabilities may be affected. For example, such a thicker dielectric layer may reduce the sensitivity of the sensor device to the depression or compression. The sensor may have a certain region where it is highly sensitive to changes in the depression/compression. With thinner thickness of the dielectric layer, the sensitivity region is decreased to a lower pressure region. With thicker dielectric layer, the sensitivity is on a higher pressure region. The first application using the thinner dielectric layer may thus be a haptic sensor device or a touch-sensitive sensor device while the second application using the thicker dielectric layer may be an impact-sensitive sensor.

In an embodiment, the materials used in the textile layers and/or in the dielectric layer comprise a recyclable or renewable material. For example, the dielectric layer may comprise renewable polyol material originating from plant oils or corresponding origins. The textile layers may include nylon or polyethylene terephthalate (PET) manufactured at least partially from renewable or recycled materials. Biocarbon is mentioned above as conductive material for the textile layers, and alternative materials include carbon black (a form of paracrystalline carbon) and carbon fibers.

It will be obvious to a person skilled in the art that, as technology advances, the inventive concept can be implemented in various ways. Embodiments are not limited to the examples described above but may vary within the scope of the claims.

## Claims

1. A sensor device comprising:
a first textile layer (716) of electrically conductive and porous textile material, forming a first electrode of the sensor device;
a second textile layer (710) of electrically conductive and porous textile material, forming a second electrode of the sensor device;
at least one dielectric layer (712, 714) of deformable material and disposed between the first textile layer and second textile layer, wherein the at least one dielectric layer penetrates at least partially the porous textile material the first textile layer and the second textile layer, thus integrating into the first textile layer and the second textile layer; and
means for measuring at least one of capacitance between the first textile layer and the second textile layer and resistance of at least one of the first textile layer and the second textile layer.

2. The sensor device of claim 1, wherein the sensor device is a strain sensor, and wherein the means are configured to measure strain on the basis of the capacitance between the first textile layer and the second textile layer.

3. The sensor device of claim 1 or 2, wherein the sensor device is a pressure sensor, wherein the means are configured to measure pressure induced on the first textile layer and/or the second textile layer on the basis of the resistance of the at least one of the first textile layer and the second textile layer.

4. The sensor device of any preceding claim, wherein the deformable material of the at least one dielectric layer is elastomer.

5. The sensor device of claim 4, wherein the deformable material of the at least one dielectric layer comprises biocarbon mixed with said elastomer.

6. The sensor device of any preceding claim, wherein the first textile layer is arranged to face an object that the sensor device is configured to measure, and wherein the at least one dielectric layer penetrates the first textile layer substantially as deep as it penetrates the second textile layer.

7. The sensor device of any preceding claim, wherein the sensor device is a switch responsive to a change in the at least the measured resistance.

8. The sensor device of any preceding claim, wherein the first textile layer and second textile layer are made of knitted fabrics.

9. The sensor device of any preceding claim, wherein the at least one dielectric layer comprises a first dielectric layer and a second dielectric layer, wherein the first dielectric layer is completely embedded into the first textile layer, and wherein the second dielectric layer is partially embedded into the second textile layer.

10. A method for manufacturing a sensor device, comprising:
providing a first textile layer (716) of electrically conductive and porous textile material, forming a first electrode of the sensor device;
providing a second textile layer (710) of electrically conductive and porous textile material, forming a second electrode of the sensor device;
forming at least one dielectric layer (712, 714) of deformable material on the first textile layer and the second textile layer by disposing the deformable material in a liquid form on the respective first textile layer and second textile layer and allowing the deformable material to penetrate the porous textile material and solidify; and
arranging the first textile layer and the second textile layer into a layered structure where the at least one dielectric layer is disposed between the first textile layer and the second textile layer.

11. The method of claim 10, further comprising controlling, with the amount of the deformable material disposed on the first textile layer and the second textile layer, thickness of the at least one dielectric layer and, thus, electric properties of the sensor device.

12. The method of claim 10 or 11, wherein the at least one dielectric layer comprises at least two layers where the dielectric layer has penetrated the first textile layer and the second textile layer and, between the at least two layers, a layer where the dielectric layer has not penetrated a textile layer.

13. The method of any preceding claim 10 to 12, wherein the deformable material is disposed first on the first textile layer and, thereafter, the second textile layer is placed on the first textile layer such that the deformable material on the first textile layer penetrates the second textile layer.

## Patentansprüche

1. Sensorvorrichtung umfassend:
eine erste Textilschicht (716) aus elektrisch leitendem und porösem Textilmaterial, die eine erste Elektrode der Sensorvorrichtung bildet;
eine zweite Textilschicht (710) aus elektrisch leitendem und porösem Textilmaterial, die eine zweite Elektrode der Sensorvorrichtung bildet;
mindestens eine dielektrische Schicht (712, 714) aus verformbarem Material, die zwischen der ersten Textilschicht und der zweiten Textilschicht angeordnet ist, wobei die mindestens eine dielektrische Schicht zumindest teilweise das poröse Textilmaterial der ersten Textilschicht und der zweiten Textilschicht durchdringt, wodurch sie in die erste Textilschicht und die zweite Textilschicht integriert wird; und
Mittel zum Messen mindestens einer Kapazität zwischen der ersten Textilschicht und der zweiten Textilschicht und eines Widerstands mindestens einer der ersten Textilschicht und der zweiten Textilschicht.

2. Sensorvorrichtung nach Anspruch 1, wobei die Sensorvorrichtung ein Dehnungssensor ist, und wobei die Mittel dafür konfiguriert sind, Dehnung auf der Grundlage der Kapazität zwischen der ersten Textilschicht und der zweiten Textilschicht zu messen.

3. Sensorvorrichtung nach Anspruch 1 oder 2, wobei die Sensorvorrichtung ein Drucksensor ist, wobei die Mittel dafür konfiguriert sind, einen auf die erste Textilschicht und/oder die zweite Textilschicht ausgeübten Druck auf der Grundlage des Widerstands der mindestens einen der ersten Textilschicht und der zweiten Textilschicht zu messen.

4. Sensorvorrichtung nach einem der vorstehenden Ansprüche, wobei das verformbare Material der mindestens einen dielektrischen Schicht ein Elastomer ist.

5. Sensorvorrichtung nach Anspruch 4, wobei das verformbare Material der mindestens einen dielektrischen Schicht Biokohlenstoff umfasst, der mit dem Elastomer gemischt ist.

6. Sensorvorrichtung nach einem der vorstehenden Ansprüche, wobei die erste Textilschicht so angeordnet ist, dass sie einem Objekt zugewandt ist, für dessen Messung die Sensorvorrichtung konfiguriert ist, und wobei die mindestens eine dielektrische Schicht die erste Textilschicht im Wesentlichen so tief durchdringt wie die zweite Textilschicht.

7. Sensorvorrichtung nach einem der vorstehenden Ansprüche, wobei die Sensorvorrichtung ein Schalter ist, der auf eine Änderung des mindestens einen gemessenen Widerstands reagiert.

8. Sensorvorrichtung nach einem der vorstehenden Ansprüche, wobei die erste Textilschicht und die zweite Textilschicht aus gewirkten Stoffen hergestellt sind.

9. Sensorvorrichtung nach einem der vorstehenden Ansprüche, wobei die mindestens eine dielektrische Schicht eine erste dielektrische Schicht und eine zweite dielektrische Schicht umfasst, wobei die erste dielektrische Schicht vollständig in die erste Textilschicht eingebettet ist, und wobei die zweite dielektrische Schicht teilweise in die zweite Textilschicht eingebettet ist.

10. Verfahren zur Herstellung einer Sensorvorrichtung, umfassend:
Bereitstellen einer ersten Textilschicht (716) aus elektrisch leitendem und porösem Textilmaterial, die eine erste Elektrode der Sensorvorrichtung bildet;
Bereitstellen einer zweiten Textilschicht (710) aus elektrisch leitendem und porösem Textilmaterial, die eine zweite Elektrode der Sensorvorrichtung bildet;
Ausbilden mindestens einer dielektrischen Schicht (712, 714) aus verformbarem Material auf der ersten Textilschicht und der zweiten Textilschicht durch Aufbringen des verformbaren Materials in flüssiger Form jeweils auf die erste Textilschicht und die zweite Textilschicht und Zulassen, dass das verformbare Material das poröse Textilmaterial durchdringt und sich verfestigt; und
Anordnen der ersten Textilschicht und der zweiten Textilschicht in einer Schichtstruktur, wobei die mindestens eine dielektrische Schicht zwischen der ersten Textilschicht und der zweiten Textilschicht angeordnet ist.

11. Verfahren nach Anspruch 10, das ferner Kontrollieren umfasst, mit der Menge des verformbaren Materials, das auf der ersten Textilschicht und der zweiten Textilschicht angeordnet ist, der Dicke der mindestens einen dielektrischen Schicht und somit der elektrischen Eigenschaften der Sensorvorrichtung.

12. Verfahren nach Anspruch 10 oder 11, wobei die mindestens eine dielektrische Schicht mindestens zwei Schichten umfasst, bei denen die dielektrische Schicht die erste Textilschicht und die zweite Textilschicht durchdrungen hat, und zwischen den mindestens zwei Schichten eine Schicht umfasst, bei der die dielektrische Schicht eine Textilschicht nicht durchdrungen hat.

13. Verfahren nach einem der vorstehenden Ansprüche 10 bis 12, wobei das verformbare Material zuerst auf der ersten Textilschicht aufgebracht wird und danach die zweite Textilschicht so auf der ersten Textilschicht angeordnet wird, dass das verformbare Material auf der ersten Textilschicht die zweite Textilschicht durchdringt.

## Revendications

1. Dispositif capteur comprenant :
une première couche textile (716) de matériau textile électriquement conducteur et poreux, formant une première électrode du dispositif capteur ;
une seconde couche textile (710) de matériau textile électriquement conducteur et poreux, formant une seconde électrode du dispositif capteur ;
au moins une couche diélectrique (712, 714) de matériau déformable et disposée entre la première couche textile et la seconde couche textile, dans lequel l'au moins une couche diélectrique pénètre au moins partiellement dans le matériau textile poreux de la première couche textile et de la seconde couche textile, s'intégrant ainsi dans la première couche textile et la seconde couche textile ; et
des moyens pour mesurer au moins l'une parmi une capacité entre la première couche textile et la seconde couche textile et une résistance d'au moins l'une parmi la première couche textile et la seconde couche textile.

2. Dispositif capteur selon la revendication 1, dans lequel le dispositif capteur est un capteur de déformation, et dans lequel les moyens sont configurés pour mesurer une déformation sur la base de la capacité entre la première couche textile et la seconde couche textile.

3. Dispositif capteur selon la revendication 1 ou 2, dans lequel le dispositif capteur est un capteur de pression, dans lequel les moyens sont configurés pour mesurer une pression induite sur la première couche textile et/ou la seconde couche textile sur la base de la résistance de l'au moins une parmi la première couche textile et la seconde couche textile.

4. Dispositif capteur selon une quelconque revendication précédente, dans lequel le matériau déformable de l'au moins une couche diélectrique est un élastomère.

5. Dispositif capteur selon la revendication 4, dans lequel le matériau déformable de l'au moins une couche diélectrique comprend du biocarbone mélangé avec ledit élastomère.

6. Dispositif capteur selon une quelconque revendication précédente, dans lequel la première couche textile est agencée pour faire face à un objet que le dispositif capteur est configuré pour mesurer, et dans lequel l'au moins une couche diélectrique pénètre dans la première couche textile sensiblement aussi profond qu'elle pénètre dans la seconde couche textile.

7. Dispositif capteur selon une quelconque revendication précédente, dans lequel le dispositif capteur est un commutateur sensible à une variation dans l'au moins la résistance mesurée.

8. Dispositif capteur selon une quelconque revendication précédente, dans lequel la première couche textile et la seconde couche textile sont constituées de tissus tricotés.

9. Dispositif capteur selon une quelconque revendication précédente, dans lequel l'au moins une couche diélectrique comprend une première couche diélectrique et une seconde couche diélectrique, dans lequel la première couche diélectrique est complètement incorporée dans la première couche textile, et dans lequel la seconde couche diélectrique est partiellement incorporée dans la seconde couche textile.

10. Procédé pour la fabrication d'un dispositif capteur, comprenant :
la fourniture d'une première couche textile (716) de matériau textile électriquement conducteur et poreux, formant une première électrode du dispositif capteur ;
la fourniture d'une seconde couche textile (710) de matériau textile électriquement conducteur et poreux, formant une seconde électrode du dispositif capteur ;
la formation d'au moins une couche diélectrique (712, 714) de matériau déformable sur la première couche textile et la seconde couche textile en disposant le matériau déformable sous forme liquide sur la première couche textile et la seconde couche textile respectives et en laissant le matériau déformable pénétrer dans le matériau textile poreux et se solidifier ; et
l'agencement de la première couche textile et de la seconde couche textile en une structure en couches où l'au moins une couche diélectrique est disposée entre la première couche textile et la seconde couche textile.

11. Procédé selon la revendication 10, comprenant en outre la maîtrise, avec la quantité du matériau déformable disposé sur la première couche textile et la seconde couche textile, de l'épaisseur de l'au moins une couche diélectrique et, ainsi, des propriétés électriques du dispositif capteur.

12. Procédé selon la revendication 10 ou 11, dans lequel l'au moins une couche diélectrique comprend au moins deux couches où la couche diélectrique a pénétré dans la première couche textile et la seconde couche textile et, entre les au moins deux couches, une couche où la couche diélectrique n'a pas pénétré dans une couche textile.

13. Procédé selon une quelconque revendication 10 à 12 précédente, dans lequel le matériau déformable est disposé d'abord sur la première couche textile et, par la suite, la seconde couche textile est placée sur la première couche textile de sorte que le matériau déformable sur la première couche textile pénètre dans la seconde couche textile.
